# EUROPÄISCHE PATENTANMELDUNG

(11) **EP 1 845 336 A1**
(43) Veröffentlichungstag der Anmeldung: **17.10.2007**
(21) Anmeldenummer: 06015304.6
(22) Anmeldetag: 22.07.2006
(51) Int. Cl.: G01B 11/04, B07C 3/14

(54) **Verfahren zur optischen Erfassung von bewegten Objekten und Vorrichtung**

(30) Priorität: 11.04.2006 DE 102006017337
(71) Anmelder: SICK AG, 79183 Waldkirch (DE)
(72) Erfinder: Nübling, Achim, 79312 Emmendingen (DE); Schopp, Thomas, 79112 Freiburg (DE)
(74) Vertreter: Ludewigt, Christoph

(57) **Zusammenfassung**

Die Erfindung betrifft ein Verfahren zur optischen Erfassung von durch einen Erfassungsbereich einer Einrichtung beförderten Objekten mit folgenden Schritten:
- Befördern des Objektes entlang einer Förderrichtung durch den Erfassungsbereich,
- optisches Erfassen der Lage und/oder der geometrischen Form des Objektes und/oder der Helligkeits- bzw. Kontrastwerte des vom Objekt remittierten Lichtes mittels eines ersten Sensors,
- Festlegen von interessierenden und/oder nicht interessierenden Bereichen des Objektes,
- Übermittlung der interessierenden und/oder nicht interessierenden Bereiche an einen zweiten optischen Sensor der Einrichtung,
- Befördern des Objektes durch den Erfassungsbereich der Einrichtung und Bearbeiten des Objektes mit der Einrichtung, wobei das Objekt in den interessierenden Bereichen mit höherer Auflösung als in den nicht interessierenden Bereich erfasst wird.

## Beschreibung

Die Erfindung betrifft ein Verfahren zur Erfassung von durch den Wirkbereich einer Einrichtung, insbesondere einer optischen Scaneinheit, in eine Förderrichtung bewegten Objekten und eine Vorrichtung zur Durchführung des Verfahrens.

Bei derartigen Vorrichtungen oder Verfahren, die beispielsweise Kamerasysteme einsetzen, ist es oftmals nötig, die erfassten Bilddaten in Echtzeit oder zumindest mit sehr hoher Geschwindigkeit auszuwerten, was zur Folge hat, dass dem Auswertesystem eine hohe Rechenleistung zur Verfügung stehen muss, welche mit entsprechendem wirtschaftlichen Aufwand verbunden ist. Um die erforderliche Rechenleistung zu reduzieren, ist es bekannt, mittels einer Vorverarbeitungsstufe vor der eigentlichen Auswertung der erfassten Bilddaten solche Bereiche der aufgenommenen Bilder zu identifizieren, die von besonderem Interesse sind. Derartige interessierende Bereiche werden in der Regel als "Regions of Interest" (ROI) bezeichnet.

Nachdem mittels der Vorverarbeitungsstufe die ROIs definiert wurden, kann man sich im Rahmen der eigentlichen Auswerteschaltung darauf beschränken, nur die erfassten Bilddaten dieser ROls zu verarbeiten, was entsprechend weniger Rechenleistung erfordert als die Verarbeitung der vollständigen, vom optischen Sensor bzw. von der Kamera aufgenommenen Bilder.

Gemäß Stand der Technik werden die ROIs über eine Vorverarbeitung der kompletten erfassten Bilddaten ermittelt, wobei hier aufgrund des hohen Bilddatenstroms einfache Algorithmen zur Anwendung gelangen, die beispielsweise nur feststellen, ob der Grauwert eines Pixels oberhalb eines vorgegebenen Schwellwerts liegt. Wenn dies der Fall ist, wird das überprüfte Pixel einer ROI zugeordnet, anderenfalls wird es bei der weiteren Auswertung nicht berücksichtigt. Derartige Algorithmen sind unter anderem mit dem Nachteil behaftet, dass die jeweilige Bedingung, im vorstehend genannten Beispiel das Überschreiten eines vorgegebenen Schwellwerts, nicht zuverlässig immer erfüllt wird, da beispielsweise ein zu erfassendes, interessierendes Objekt nicht zwangsläufig immer heller ist als der das Objekt umgebende Hintergrund. In derartigen Fällen können die genannten Algorithmen nicht oder nur eingeschränkt zur Anwendung gelangen. Ein weiterer großer Nachteil ist, dass zur Bestimmung der ROIs die kompletten erfassten Bilddaten genommen werden. Dazu ist es notwendig das gesamte Objekt mit ausreichender Auflösung aufzunehmen. Nach Bestimmung der ROIs kann dann ein nicht interessierender Teil der Bilddaten verworfen werden.

In anderen Anwendungen werden empfindliche Objekte von Greifern eines Roboters erfasst. Zum exakten Platzieren der Angreifpunkte ist eine genaue Positionierung der Greifer, die über optische Erfassung des Objektes erfolgen kann, notwendig. Dazu ist es notwendig, das Objekt optisch genau zu erfassen, die Bilddaten auszuwerten und die optischen Informationen an den Roboter weiter zu geben. In der Regel ist der Datenstrom aufgrund der optischen Daten sehr hoch.

Ausgehend von diesem Stand der Technik ist es Aufgabe der Erfindung, ein verbessertes Verfahren zum optischen Erfassen von Objekten sowie eine Vorrichtung zur Durchführung des Verfahrens bereitzustellen, das insbesondere eine schnellere Datenübermittlung erlaubt und das die notwendige Rechenleistung und Zeit für die optische Erfassung reduziert.

Diese Aufgabe wird durch ein Verfahren mit den Merkmalen des Anspruchs 1 und eine Vorrichtung mit den Merkmalen des Anspruchs 10 gelöst.

Erfindungsgemäß umfasst das Verfahren nach der Erfindung die folgenden Schritte:
- Befördern des Objektes entlang einer Förderrichtung durch den Erfassungsbereich,
- optisches Erfassen der Lage und/oder der geometrischen Form des Objektes und/oder der Helligkeits- bzw. Kontrastwerte des vom Objekt remittierten Lichtes mittels eines ersten Sensors,
- Festlegen von interessierenden und/oder nicht interessierenden Bereichen des Objektes,
- Übermittlung der interessierenden und/oder nicht interessierenden Bereiche an einen zweiten optischen Sensor der Einrichtung,
- Befördern des Objektes durch den Erfassungsbereich der Einrichtung und Bearbeiten des Objektes mit der Einrichtung, wobei das Objekt in den interessierenden Bereichen mit höherer Auflösung als in den nicht interessierenden Bereichen erfasst wird.

Dieses Verfahren hat den wesentlichen Vorteil, dass bereits nach Erfassung der Lage und/oder der geometrischen Form des Objektes und/oder der Helligkeits- bzw. Kontrastwerte des vom Objekt remittierten Lichtes eine Aufteilung in interessierende und nicht interessierende Bereiche vorgenommen wird. Damit brauchen dann nur die Positionsdaten der interessierenden Bereiche an die Einrichtung zur Bearbeitung des Objektes weitergegeben werden, wodurch der Datenstrom bereits erheblich reduziert ist. Durch diese Vorauswahl der interessierenden Bereiche kann die optische Erfassung für die eigentliche Bearbeitung erheblich schneller und mit weniger Rechenzeit erfolgen, denn nur in den interessierenden Bereichen wird das Objekt mit höherer Auflösung als in den nicht interessierenden Bereichen erfasst. Dadurch kann die Rechenzeit auf die Auswertung der interessierenden Bereiche konzentriert werden.

Das Objekt in den interessierenden Bereichen mit höherer Auflösung zu erfassen, kann dadurch realisiert werden, dass mittels des zweiten optischen Sensors das Objekt in den interessierenden Bereichen mit höherer Auflösung als in den nicht interessierenden Bereichen aufgenommen wird. Dabei arbeitet der zweite optische Sensor mit unterschiedlichen Auflösungen, je nachdem welcher Bereich in seinem Sichtfeld liegt.

Das Objekt in den interessierenden Bereichen mit höherer Auflösung zu erfassen, kann alternativ aber auch dadurch realisiert werden, dass das Objekt von dem zweiten optischen Sensor laufend zwar mit gleicher optischer Auflösung optisch erfasst wird. Jedoch werden die erfassten Bilddaten von dem zweiten optischen Sensor oder einer ihm zugeordneten Auswerteeinheit in den interessierenden Bereichen vollständiger ausgewertet als die Daten der nicht interessierenden Bereiche. Eine solche Auswertung kann beispielsweise darin bestehen, dass bei einer zeilenweise Aufnahme der Bilddaten in den interessierenden Bereichen sämtliche Zeilen ausgewertet werden und in den nicht interessierenden Bereichen nur ein Teil der Zeilen, beispielsweise jede dritte, oder eventuell sogar keine der Zeilen.

Das Objekt ständig durch den zweiten Sensor mit höchst möglicher Auflösung optisch zu erfassen, aber die erfassten Daten nur in den interessierenden Bereichen vollständiger auszuwerten und in den nicht interessierenden Bereichen unvollständig auszuwerten, so dass letztendlich die interessierenden Bereiche mit einer höheren Auflösung erfasst sind, ist die bevorzugte Alternative, denn der zeitbegrenzende Faktor ist in der Regel nicht die optische Aufnahme der Daten mittels des zweiten Sensors, sondern die notwendige Rechenzeit zur Verarbeitung der vom Sensor aufgenommenen Daten. Indem also ein Teil der Daten in den nicht interessierenden Bereichen verworfen wird, kann Rechenzeit erheblich eingespart werden.

Eine Unterscheidung in interessierende und nicht interessierende Bereiche kann auf die verschiedensten Arten und anhand verschiedenster Kriterien erfolgen. In einem ersten Beispiel können sich interessierende Bereiche aus der Lage und der geometrischen Form eines Objektes ergeben. Handelt es sich beispielsweise um ein quaderförmiges Paket und soll die Form exakt erfasst werden, so sind insbesondere die Eckbereiche von höherem Interesse als die stetig verlaufenden Seitenkanten. In einem anderen Beispiel könnte der interessierende Bereich aus einem aufgeklebten Etikett mit einem darauf aufgedruckten Barcode bestehen. Ein solches Etikett lässt sich möglicherweise durch andere Helligkeits- bzw. Kontrastwerte des remittierten Lichts ermitteln. Die Position und Ausdehnung des auf diese Art ermittelten interessierenden Bereichs wird dann an den zweiten optischen Sensor weitergegeben.

Insbesondere in der Kameraanwendung, bei der also der zweite optische Sensor und/oder gegebenenfalls die Einrichtung zum Bearbeiten des Objektes als Kamera ausgebildet ist, hat dieses Verfahren besondere Zeitvorteile, da Bilddaten immer sehr hohe Rechenkapazitäten und Rechenzeiten erfordern. Beispielsweise in Barcodeleseanwendungen oder OCR Anwendungen kann durch die Vorklassifizierung in interessierende und nicht interessierende Bereiche ein besonderer Vorteil erreicht werden.

Wie dieses Beispiel zeigt, soll unter dem Begriff "Bearbeiten" des Objektes eine Vielzahl von Möglichkeiten verstanden werden, z.B. wie beschrieben das optische Erfassen des Objektes zum Lesen von Informationen auf dem Objekt. Es kann aber auch eine Bearbeitung mit einem Roboter, z.B. das Ergreifen des Objektes oder das automatische Aufkleben eines Etiketts o.dgl. darunter verstanden werden.

Vorteilhafterweise wird die Lage und/oder geometrische Form des Objektes und/oder die Helligkeits- bzw. Kontrastwerte des vom Objekt remittierten Lichtes am Beginn des den Wirkungsbereich der Einrichtung umfassenden Erfassungsbereichs erfasst, damit sofort eine Aufteilung in interessierende und nicht interessierende Bereiche vorgenommen werden kann.

In einer teilweise bereits erwähnten Ausbildung der Erfindung umfasst der zweite optische Sensor eine Scaneinheit, mit der das Objekt zeilenweise optisch erfasst wird. Dabei ist es vorteilhaft, wenn das Objekt zeilenweise mit Zeilen quer zur Förderrichtung von dem ersten Sensor zur Bestimmung der Lage und/oder geometrischen Form erfasst wird und von der Scaneinheit ebenfalls zeilenweise erfasst wird. Die Ausrichtung der Zeilen des ersten Sensors müssen nicht parallel zur Ausrichtung der des zweiten Sensors liegen, denn die Information über die interessierenden Bereiche wird anhand deren Position auf dem Objekt über ein gemeinsames Koordinatensystem an den zweiten Sensor weitergegeben.

Wenn aber der erste Sensor und der zweite Sensor in etwa parallel ausgerichtet sind, also die von ihnen aufgenommenen Zeilen in etwa parallel verlaufen, kann die Unterscheidung in interessierende und nicht interessierende Bereiche dann auf einfachste Weise erfolgen, indem nach Erfassung des vollständigen Objektes durch den ersten Sensor nur ausgewählte Zeilenpositionen an die Scaneinheit bzw. deren Auswerteeinheit weitergeleitet werden und nur an diesen ausgewählten Positionen die vom zweiten Sensor aufgenommenen Zeilen auch ausgewertet werden.

Vorrichtungsgemäß wird die Aufgabe gelöst durch eine Vorrichtung mit einer Fördereinrichtung zur Förderung eines Objektes durch einen Erfassungsbereich, durch den das Objekt entlang einer Förderrichtung befördert wird, mit wenigstens einem ersten Sensor zum Erfassen der Lage und/oder der geometrischen Form des Objektes und/oder der Helligkeits- bzw. Kontrastwerte des vom Objekt remittierten Lichtes, mit Mitteln zum Festlegen von interessierenden und nicht interessierenden Bereichen und mit Mitteln zum Erfassen der interessierenden Bereiche mit höherer Auflösung als die der nicht interessierenden Bereiche und mit Mitteln zum Bearbeiten des Objektes.

Vorteilhafterweise ist der erste Sensor als Laserscanner ausgebildet. Die Scanlinie des Laserscanners erfasst das Objekt zeilenweise, so dass, wenn die Scanlinien quer zur Förderrichtung verlaufen, das Objekt durch die Förderbewegung komplett zeilenweise erfasst wird und eine Lage und/oder geometrische Formbestimmung einfach erfolgen kann.

In Weiterbildung der Erfindung ist der zweite Sensor als Zeilenkamera ausgebildet. Die Scaneinheit muss keine Zeilenkamera mit nur einer Empfangszeile, beispielsweise einer CCD-Zeile, sein. Ein zeilenweises Erfassen kann auch erreicht werden, wenn ein zweidimensionales Empfängerarray eingesetzt wird, aber die Scaneinheit eine Beleuchtungseinheit aufweist, die eine linienförmige Beleuchtung des Objektes bewirkt.

Weiter kann alternativ eine Matrixkamera als zweiter Sensor eingesetzt werden, die ein Bild erfasst, wobei die Bildauswertung entsprechend den durch den ersten Sensor definierten interessierenden und nicht interessierenden Bereichen mit unterschiedlicher Genauigkeit/Auflösung erfolgt. Für eine Matrixkamera könnte auch ein Blitzgerät als Beleuchtungseinheit eingesetzt werden, das sogar mit der Information, wo auf dem Objekt interessierende Bereiche liegen, derart angesteuert werden könnte, dass die Beleuchtung auf diese interessierende Bereiche optimiert wird, so dass gerade die interessierenden Bereiche am besten ausgeleuchtet sind.

Im Folgenden wird die Erfindung an Hand eines Ausführungsbeispiels unter Bezugnahme auf die Zeichnung im Einzelnen erläutert. In der Zeichnung zeigen:
- Fig. 1: eine schematische Darstellung einer erfindungsgemäßen Vorrichtung;
- Fig. 2 und 3: eine Draufsicht auf Objekt und Förderband.

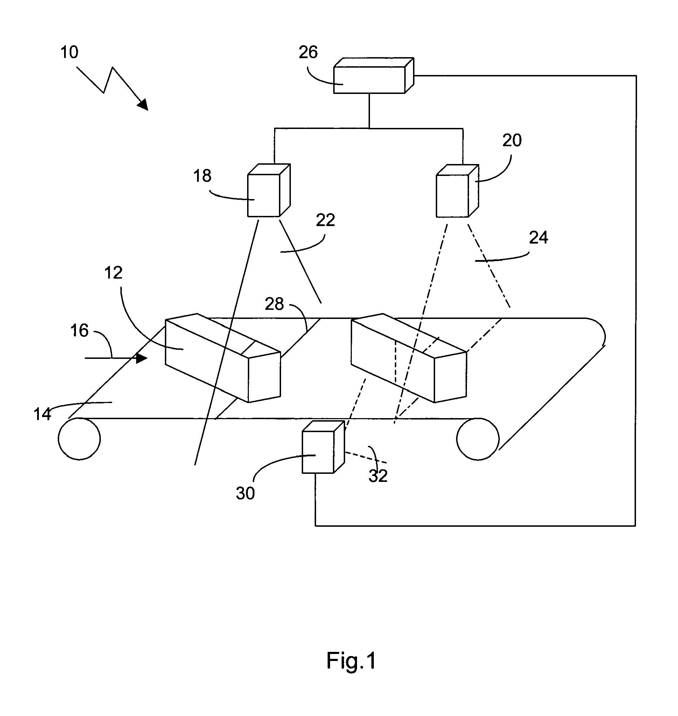

Das nachfolgend beschriebene Ausführungsbeispiel betrifft eine Kameraanwendung. Fig. 1 zeigt eine erfindungsgemäße Vorrichtung 10, bei der sich ein Objekt 12 auf einem Förderband 14 befindet und das in Richtung des Pfeils 16 transportiert wird. Oberhalb des Förderbandes 14 sind in Förderrichtung 16 nacheinander ein Laserscanner 18 sowie eine erste Zeilenkamera 20 montiert.

Beim Laserscanner 18 handelt es sich um einen Linienscanner, welcher dazu geeignet ist, periodisch einen innerhalb einer Abtastebene 22 bewegten Laserstrahl auszusenden. Die Abtastebene 22 erstreckt sich dabei beispielsweise senkrecht zur Förderrichtung 16. Der Laserscanner 18 ist gegenüber dem Förderband 14 so positioniert, dass der ausgesandte Laserstrahl das Förderband 14 etwas mehr als seine gesamte Breite abtastet, so dass sämtliche Objekte, die sich auf dem Förderband 14 befinden, vom Laserscanner 18 erfasst werden können.

In entsprechender Weise ist das V-förmige, innerhalb einer Ebene 24 liegende Gesichtsfeld der ersten Zeilenkamera 20 so ausgerichtet, dass alle auf dem Förderband 14 unter der Zeilenkamera 20 vorbei beförderten Objekte von der Zeilenkamera 20 erfasst werden können. Die Ebene 24 des Gesichtsfeldes der Zeilenkamera 20 kann sich dabei parallel zur Abtastebene 22 des Laserscanners 18 und senkrecht zur Förderrichtung 16 erstrecken. Eine parallele Ausrichtung ist aber nicht zwingend notwendig.

Des Weiteren ist eine zweite Zeilenkamera 30 an der Seite des Förderbandes 14 angeordnet, deren Abtastebene 32 senkrecht zum Förderband 14 ausgerichtet ist und die geeignet ist, das Objekt 12 von der Seite zu erfassen. In analoger Weise könnten an weiteren Seiten weitere Zeilenkameras angeordnet sein, um eine Mehrseitenerfassung des Objektes 12 zu ermöglichen.

Laserscanner 18 und Zeilenkameras 20 und 30 sind mit einer Steuer- und Auswerteschaltung 26 verbunden, welche zum einen dazu geeignet ist, Laserscanner 18 und die Zeilenkameras in der erfindungsgemäß nötigen Weise anzusteuern und zum anderen auch für eine Auswertung der von Laserscanner 18 und Zeilenkameras 20 und 30 gelieferten Daten sorgt. Die Steuer- und Auswerteschaltung kann extern als separate Einheit vorliegen oder aber auch in den Laserscanner 18 oder eine der Zeilenkameras, beispielsweise in die Kamera 20, die dieselbe Seite des Objektes wie der Laserscanner erfasst, integriert sein. Der Steuer- und Auswerteschaltung 26 sind die Abstände des Laserscanners 18 zur Förderebene des Förderbandes 14 bezüglich all derjenigen Punkte bekannt, in denen die Abtastebene 22 des Laserscanners 18 diese Förderebene schneidet. Die entsprechende Schnittlinie ist in Fig. 1 mit dem Bezugszeichen 28 gekennzeichnet.

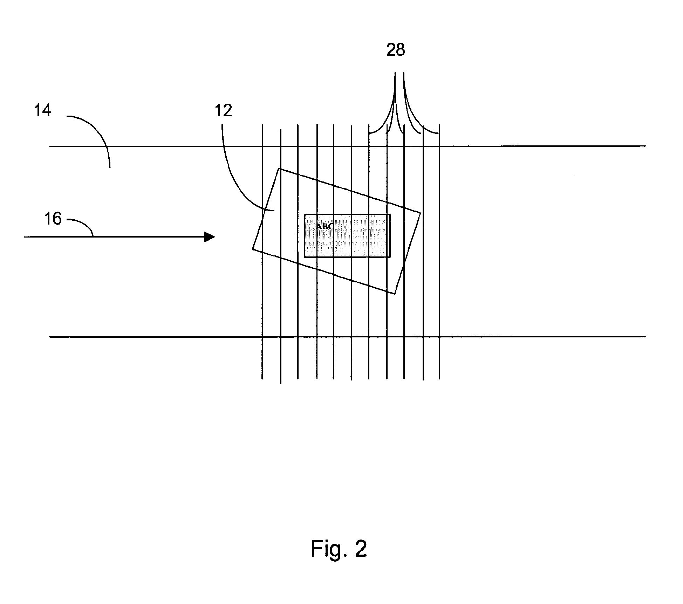

Wenn das Objekt 12 in Förderrichtung 16 durch die Scanebene 22 befördert wird, wird es zeilenweise von dem Laserscanner 18 erfasst, wie dies in Fig.2 schematisch dargestellt ist. In Fig.2 ist eine Draufsicht dargestellt, in der die Scanlinien 28 des Laserscanners 18 zu unterschiedlichen Zeitpunkten dargestellt sind. Sie treffen das Objekt in äquidistantem Abstand aufgrund der gleichmäßigen Fördergeschwindigkeit. Tatsächlich wird das Objekt 12, wie bereits beschrieben, an dem Laserscanner vorbeibewegt. Insofern ist die Darstellung in Fig.2 nicht korrekt, sondern dient lediglich dem besseren Verständnis. In der Regel liegen aufgrund der sehr hohen Scanfrequenz die Scanlinien auch erheblich dichter als in der schematischen Darstellung (beispielsweise mehr als zehn Linien pro cm).

Mittels des Laserscanners 18 und der Steuer- und Auswerteschaltung 26 kann somit festgestellt werden, an welchen Positionen des Förderbands 14 sich Objekte befinden und wie deren Lage und Geometrie ist.

Wenn nun die zweite Zeilenkamera 30 eine auf einer Seite des Objektes angebrachte Information lesen muss, die beispielsweise auf der von der zweiten Zeilenkamera schräg einsehbaren Vorderseite angebracht ist, so muss dieser Bereich hochaufgelöst aufgenommen werden, wobei insbesondere die Auflösung in Förderrichtung 14 gemeint ist und dazu beispielsweise auch die Fokuseinstellungen entsprechend schnell nachgefahren werden. In dem Mittenbereich des Objektes ist eine solch hohe Auflösung in Förderrichtung und ein schnelles Nachfahren der Fokuseinstellungen nicht notwendig.

Nach der Erfindung wird durch den ersten Sensor 18 die Lage und/oder geometrische Form des Objektes 12 und/oder Helligkeits- bzw. Kontrastwerte des vom Objekt remittierten Lichtes bestimmt und daraus interessierende und nicht interessierende Bereiche festgelegt. In dem beschriebenen Beispiel wäre das der Bereich der Vorderseite. Es wird somit eine Information an die Zeilenkameras und/oder die Auswerte- und Steuereinheit 26 gegeben, dass im Bereich der Vorderseite, deren Schnitt mit den Gesichtsfeldern 24 und 32 der Zeilenkameras über die Fördergeschwindigkeit bestimmbar ist, eine höhere Auflösung erforderlich ist. Von dem ersten Sensor 18 erfolgt also eine Übermittlung der Positionen von interessierenden und nicht interessierenden Bereichen an die Steuer- und Auswerteeinheit, die diese Information zur Auswertung der Kamera 20 aufgenommen Bilddaten verwertet. Da es sich um Positionsdaten handelt, muss beiden Sensoren 18 und 20 ein gemeinsames Koordinatensystem zugrunde gelegt werden.

Die Zeilenkameras erfassen das vorbeitransportierte Objekt 12 stets mit gleichbleibend hoher optischer Auflösung. Mit anderen Worten, bleibt die Scanfrequenz der Zeilenkamera, mit der das Objekt beim Vorbeitransport gescannt wird, gleich. Allerdings werden in dem interessierenden Bereich, also der Vorderseite, alle aufgenommenen Zeilen auch ausgewertet, so dass ein Bild mit hoher Auflösung erhalten wird und in den nicht interessierenden Bereichen wird nur ein Teil der Zeilen, beispielsweise jede dritte oder jede zehnte Zeile ausgewertet, so dass dieser Bereich mit niedrigerer Auflösung erfasst wird. Damit fallen erheblich weniger Datenmengen bei der Verarbeitung der von den Zeilenkameras erfassten Zeilen an, wodurch Rechenzeit erheblich eingespart werden kann.

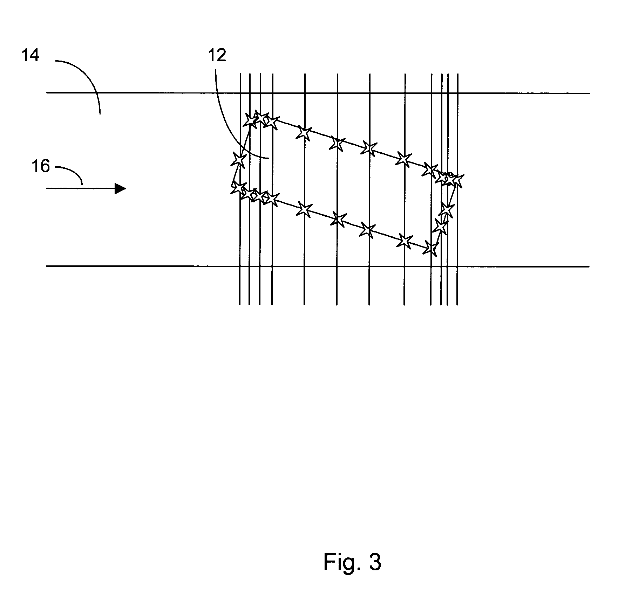

Diese zeilenweise Erfassung des Objektes mit hoher und niedrigerer Auflösung in Abhängigkeit der Position auf dem Objekt ist in Fig.3 veranschaulicht, die eine ähnliche Darstellung wie die Fig.2 zeigt, wobei hier die Zeilen dargestellt sind, die auch ausgewertet werden. In den interessierenden Bereichen liegen die Zeilen dichter (höhere Auflösung) als in den nicht interessierenden Bereichen.

Dabei kann die Information über die interessierenden Bereiche vom Laserscanner an die Zeilenkameras darin bestehen, das lediglich Positionen, was bei konstanter Fördergeschwindigkeit auch bestimmten Zeitpunkten entspricht, angegeben werden, an denen bzw. zu denen eine Auswertung der von der Zeilenkamera aufgenommenen Zeile zur zeilenweise Erfassung des Objektes erfolgen soll. Diese aufs Notwendigste reduzierte Information benötigt nur geringe Übertragungskapazität vom Laserscanner an die Steuer- und Auswerteeinheit bzw. Zeilenkamera. Die Zeilenkameras selbst verbrauchen dann keine wertvolle Rechenzeit zur Differenzierung interessierender und nicht interessierender Bereiche, sondern können die volle Rechenkapazität zur Bildauswertung insbesondere der interessierenden Bereiche nutzen.

Es versteht sich, das es sich bei den interessierenden Bereichen um verschiedenste Bereiche des Objektes handeln kann. So kann ein interessierender Bereich beispielsweise ein auf die Oberseite des Objektes aufgeklebtes Etikett sein, das einen von der Kamera zu lesenden Barcode trägt. Zum Lesen des Barcodes kann dann beispielsweise eine Matrixkamera eingesetzt werden. Mittels des ersten Sensors kann beispielsweise über die unterschiedliche Helligkeit des Etiketts das Etikett erkannt und deren Position auf der Oberseite des Objektes bestimmt werden. Diese Positionsdaten werden von dem ersten Sensor an die Steuer- und Auswerteeinheit gegeben. Das weiter beförderte Objekt passiert nun den Erfassungsbereich der Matrixkamera, die ein Bild der Oberseite des Objektes aufnimmt und an die Steuer- und Auswerteeinheit weiterleitet. Die Steuer- und Auswerteeinheit hat Informationen über die Position des Etiketts, so dass das aufgenommene Bild nur im Bereich des Etiketts hoch aufgelöst ausgewertet werden braucht, um den Barcode auf dem Etikett lesen zu können. Der Rest des Bildes kann unmittelbar verworfen werden.

## Patentansprüche

1. Verfahren zur optischen Erfassung von durch einen Erfassungsbereich einer Einrichtung beförderten Objekten mit folgenden Schritten:
- Befördern des Objektes entlang einer Förderrichtung durch den Erfassungsbereich,
- optisches Erfassen der Lage und/oder der geometrischen Form des Objektes und/oder der Helligkeits- bzw. Kontrastwerte des vom Objekt remittierten Lichtes mittels eines ersten Sensors,
- Festlegen von interessierenden und/oder nicht interessierenden Bereichen des Objektes,
- Übermittlung der interessierenden und/oder nicht interessierenden Bereiche an einen zweiten optischen Sensor der Einrichtung,
- Befördern des Objektes durch den Erfassungsbereich der Einrichtung und Bearbeiten des Objektes mit der Einrichtung, wobei das Objekt in den interessierenden Bereichen mit höherer Auflösung als in den nicht interessierenden Bereichen erfasst wird.

2. Verfahren nach Anspruch 1, **dadurch gekennzeichnet, dass** das Objekt von dem zweiten optischen Sensor laufend mit gleicher optischer Auflösung erfasst wird und die von dem zweiten optischen Sensor erfassten Daten aus den interessierenden Bereichen vollständiger ausgewertet werden als die Daten der nicht interessierenden Bereiche.

3. Verfahren nach Anspruch 1, **dadurch gekennzeichnet, dass** mittels des zweiten optischen Sensors das Objekt in den interessierenden Bereichen mit höherer Auflösung als in den nicht interessierenden Bereichen aufgenommen wird.

4. Verfahren nach einem der vorhergehenden Ansprüche, **dadurch gekennzeichnet, dass** die Bereiche aufgrund der Lage und/oder geometrischen Form des Objektes und/oder der Helligkeits- bzw. Kontrastwerte des vom Objekt remittierten Lichtes bestimmt werden.

5. Verfahren nach einem der vorhergehenden Ansprüche, **dadurch gekennzeichnet, dass** die Lage und/oder geometrische Form des Objektes und/oder der Helligkeits- bzw. Kontrastwerte des vom Objekt remittierten Lichtes am Beginn des den Wirkungsbereich der Einrichtung umfassenden Erfassungsbereichs erfasst wird bzw. werden.

6. Verfahren nach einem der vorhergehenden Ansprüche, **dadurch gekennzeichnet, dass** die interessierenden Bereiche am in Förderrichtung vorderseitigen und/oder rückseitigen Ende des Objektes gelegen sind und geometrische Randbereiche des Objektes bilden.

7. Verfahren nach einem der vorhergehenden Ansprüche, **dadurch gekennzeichnet, dass** die Einrichtung einen Roboter umfasst, der das Objekt in den interessierenden Bereichen ergreift oder in den interessierenden Bereichen bearbeitet, z.B. Etiketten aufklebt.

8. Verfahren nach Anspruch 2, **dadurch gekennzeichnet, dass** das Objekt zeilenweise mit Zeilen quer zur Förderrichtung von dem ersten Sensor zur Bestimmung der Lage und/oder geometrischen Form erfasst wird und von dem zweiten Sensor ebenfalls zeilenweise erfasst wird.

9. Verfahren nach Anspruch 8, **dadurch gekennzeichnet, dass** nach Erfassung des vollständigen Objektes durch den ersten Sensor nur ausgewählte Zeilenpositionen in Bezug auf das Objekt an eine Auswerteeinheit des zweiten Sensors weitergeleitet werden und nur an diesen ausgewählten Positionen die vom zweiten Sensor zeilenweise erfassten Daten ausgewertet werden.

10. Vorrichtung zur Durchführung des Verfahrens nach einem der vorhergehenden Ansprüche mit einer Fördereinrichtung zur Beförderung eines Objektes durch einen Erfassungsbereich, durch den das Objekt entlang einer Förderrichtung befördert wird, mit wenigstens einem ersten Sensor zum Erfassen der Lage und/oder der geometrischen Form des Objektes und/oder der Helligkeits- bzw. Kontrastwerte des vom Objekt remittierten Lichtes, mit Mitteln zum Festlegen von interessierenden und nicht interessierenden Bereichen und mit Mitteln zum Erfassen der interessierenden Bereiche mit höherer Auflösung als die der nicht interessierenden Bereiche und mit Mitteln zum Bearbeiten des Objektes.

11. Vorrichtung nach Anspruch 10, **dadurch gekennzeichnet, dass** die Mittel zum Erfassen der interessierenden Bereiche einen zweiten optischen Sensor umfassen.

12. Vorrichtung nach Anspruch 10, **dadurch gekennzeichnet, dass** der erste Sensor als Laserscanner ausgebildet ist.

13. Vorrichtung nach einem der vorhergehenden Ansprüche 10 bis 12, **dadurch gekennzeichnet, dass** der zweite Sensor als Scaneinheit ausgebildet ist mit einer Beleuchtungseinheit, die eine linienförmige Beleuchtung des Objektes bewirkt.

14. Vorrichtung nach Anspruch 13, **dadurch gekennzeichnet, dass** die Scaneinheit als Zeilenkamera ausgebildet ist.

15. Vorrichtung nach Anspruch 10 oder 11, **dadurch gekennzeichnet, dass** der zweite Sensor als Matrixkamera ausgebildet ist.

16. Vorrichtung nach Anspruch 15, **dadurch gekennzeichnet, dass** der Matrixkamera eine Beleuchtungseinheit zugeordnet ist, wobei die Beleuchtungseinheit eine Steuerung aufweist, um das Licht bevorzugt auf die interessierenden Bereiche zu richten.

17. Vorrichtung nach Anspruch 16, **dadurch gekennzeichnet, dass** die Beleuchtungseinheit als Blitzgerät ausgebildet ist.

## Geänderte Patentansprüche

### Geänderte Patentansprüche gemäss Regel 86(2) EPÜ.

**1.** Verfahren zur optischen Erfassung von durch einen Erfassungsbereich einer Einrichtung beförderten Objekten mit folgenden Schritten:
- Befördern des Objektes entlang einer Förderrichtung durch den Erfassungsbereich,
- optisches Erfassen der Lage und/oder der geometrischen Form des Objektes und/oder der Helligkeits- bzw. Kontrastwerte des vom Objekt remittierten Lichtes mittels eines ersten Sensors,
- Festlegen von interessierenden und/oder nicht interessierenden Bereichen des Objektes,
- Übermittlung der interessierenden und/oder nicht interessierenden Bereiche an einen zweiten optischen Sensor der Einrichtung,
- Befördern des Objektes durch den Erfassungsbereich der Einrichtung und Bearbeiten des Objektes mit der Einrichtung, wobei das Objekt in den interessierenden Bereichen mit höherer Auflösung als in den nicht interessierenden Bereichen erfasst wird,
**dadurch gekennzeichnet, dass** das Objekt von dem zweiten optischen Sensor laufend mit gleicher optischer Auflösung erfasst wird und die von dem zweiten optischen Sensor erfassten Daten aus den interessierenden Bereichen vollständiger ausgewertet werden als die Daten der nicht interessierenden Bereiche.

**2.** Verfahren nach Anspruch 1, **dadurch gekennzeichnet, dass** mittels des zweiten optischen Sensors das Objekt in den interessierenden Bereichen mit höherer Auflösung als in den nicht interessierenden Bereichen aufgenommen wird.

**3.** Verfahren nach einem der vorhergehenden Ansprüche, **dadurch gekennzeichnet, dass** die Bereiche aufgrund der Lage und/oder geometrischen Form des Objektes und/oder der Helligkeits- bzw. Kontrastwerte des vom Objekt remittierten Lichtes bestimmt werden.

**4.** Verfahren nach einem der vorhergehenden Ansprüche, **dadurch gekennzeichnet, dass** die Lage und/oder geometrische Form des Objektes und/oder der Helligkeits- bzw. Kontrastwerte des vom Objekt remittierten Lichtes am Beginn des den Wirkungsbereich der Einrichtung umfassenden Erfassungsbereichs erfasst wird bzw. werden.

**5.** Verfahren nach einem der vorhergehenden Ansprüche, **dadurch gekennzeichnet, dass** die interessierenden Bereiche am in Förderrichtung vorderseitigen und/oder rückseitigen Ende des Objektes gelegen sind und geometrische Randbereiche des Objektes bilden.

**6.** Verfahren nach einem der vorhergehenden Ansprüche, **dadurch gekennzeichnet, dass** die Einrichtung einen Roboter umfasst, der das Objekt in den interessierenden Bereichen ergreift oder in den interessierenden Bereichen bearbeitet, z.B. Etiketten aufklebt.

**7.** Verfahren nach einem der vorhergehenden Ansprüche, **dadurch gekennzeichnet, dass** das Objekt zeilenweise mit Zeilen quer zur Förderrichtung von dem ersten Sensor zur Bestimmung der Lage und/oder geometrischen Form erfasst wird und von dem zweiten Sensor ebenfalls zeilenweise erfasst wird.

**8.** Verfahren nach Anspruch 7, **dadurch gekennzeichnet, dass** nach Erfassung des vollständigen Objektes durch den ersten Sensor nur ausgewählte Zeilenpositionen in Bezug auf das Objekt an eine Auswerteeinheit des zweiten Sensors weitergeleitet werden und nur an diesen ausgewählten Positionen die vom zweiten Sensor zeilenweise erfassten Daten ausgewertet werden.

**9.** Vorrichtung zur Durchführung des Verfahrens nach einem der vorhergehenden Ansprüche mit einer Fördereinrichtung zur Beförderung eines Objektes durch einen Erfassungsbereich, durch den das Objekt entlang einer Förderrichtung befördert wird, mit wenigstens einem ersten Sensor zum Erfassen der Lage und/oder der geometrischen Form des Objektes und/oder der Helligkeits- bzw. Kontrastwerte des vom Objekt remittierten Lichtes, mit Mitteln zum Festlegen von interessierenden und nicht interessierenden Bereichen und mit Mitteln zum Erfassen der interessierenden Bereiche mit höherer Auflösung als die der nicht interessierenden Bereiche und mit Mitteln zum Bearbeiten des Objektes,
**dadurch gekennzeichnet, dass** die Mittel zum Erfassen der interessierenden Bereiche Mittel zum laufenden Erfassen des Objekts mit gleicher optischer Auflösung und zum vollständigeren Auswerten der erfassten Daten aus den interessierenden Bereichen der Daten der nicht interessierenden Bereiche sind.

**10.** Vorrichtung nach Anspruch 9, **dadurch gekennzeichnet, dass** die Mittel zum Erfassen der interessierenden Bereiche einen zweiten optischen Sensor umfassen.

**11.** Vorrichtung nach Anspruch 9, **dadurch gekennzeichnet, dass** der erste Sensor als Laserscanner ausgebildet ist.

**12.** Vorrichtung nach einem der vorhergehenden Ansprüche 9 bis 11, **dadurch gekennzeichnet, dass** der zweite Sensor als Scaneinheit ausgebildet ist mit einer Beleuchtungseinheit, die eine linienförmige Beleuchtung des Objektes bewirkt.

**13.** Vorrichtung nach Anspruch 12, **dadurch gekennzeichnet, dass** die Scaneinheit als Zeilenkamera ausgebildet ist.

**14.** Vorrichtung nach Anspruch 9 oder 10, **dadurch gekennzeichnet, dass** der zweite Sensor als Matrixkamera ausgebildet ist.

**15.** Vorrichtung nach Anspruch 14, **dadurch gekennzeichnet, dass** der Matrixkamera eine Beleuchtungseinheit zugeordnet ist, wobei die Beleuchtungseinheit eine Steuerung aufweist, um das Licht bevorzugt auf die interessierenden Bereiche zu richten.

**16.** Vorrichtung nach Anspruch 15, **dadurch gekennzeichnet, dass** die Beleuchtungseinheit als Blitzgerät ausgebildet ist.
